# NOUVEAU FASCICULE DE BREVET EUROPEEN

(11) **EP 2 150 721 B2**
(45) Date de publication et mention de la décision concernant l'opposition: **29.07.2015**
(45) Mention de la délivrance du brevet: 27.04.2011
(21) Numéro de dépôt: 08805845.8
(22) Date de dépôt: 23.05.2008
(51) Int. Cl.: F16F 1/36, F16F 15/08

(54) **DISPOSITIF ANTIVIBRATOIRE**
VIBRATIONSSCHUTZVORRICHTUNG
ANTI-VIBRATION DEVICE

(30) Priorité: 24.05.2007 FR 0703679
(43) Date de publication de la demande: 10.02.2010
(73) Titulaire: Hutchinson, 75008 Paris (FR)
(72) Inventeur: THIERRY, Pascal, F-41100 Villiers Sur Loir (FR); LORIOT, Patrick, F-28200 Chateaudun (FR); PETIT, Pascal, F-45190 Beaugency (FR); DESMOULINS, Mickael, F-45310 Villamblain (FR)
(74) Mandataire: Cabinet Plasseraud
(86) Numéro de dépôt international: PCT/FR2008/050901
(87) Numéro de publication internationale: WO 2008/152284

(56) Documents cités:
- EP-A- 0 456 991
- EP-A- 1 321 692
- EP-A1- 1 628 040
- WO-A-02/095259
- WO-A-2005/093272
- WO-A1-2005/093272
- DE-A1- 3 019 303
- DE-A1- 4 011 827
- DE-A1- 4 322 126
- DE-A1-102004 018 241
- DE-A1-102004 056 884
- DE-B3- 10 249 387
- DE-U- 1 741 851
- FR-A- 2 810 712
- FR-A1- 2 806 035
- JP-A- H1 163 057
- JP-A- 11 063 057
- JP-A- H06 264 968
- JP-A- 2001 221 286
- JP-A- 2003 269 506
- US-A- 5 193 643
- US-A- 5 636 826
- US-A1- 2005 098 374
- BOSCH: 'Kraftfahrtechnisches Taschenbuch', 13 Juin 2002, ROBERT BOSCH, STUTTGART, ISBN 3528138769 Bd. HORST BAUER: 'Verbindungtechnik', pages 363 - 365

## Description

La présente invention est relative aux dispositifs antivibratoires.

Plus particulièrement, l'invention concerne un véhicule comprenant une caisse, un moteur et un dispositif antivibratoire pour relier le moteur à la caisse, le dispositif antivibratoire comportant :
- des première et deuxième armatures reliées entre elles par un corps en élastomère adapté pour se déformer au moins selon un axe principal de vibration, la deuxième armature étant fixée au moteur du véhicule,
- un support muni d'au moins une glissière formée respectivement par deux rainures parallèles ouvertes l'une vers l'autre et s'étendant selon une direction d'emboîtement sensiblement perpendiculaire à l'axe principal de vibration, la première armature comportant deux nervures latérales extérieures emboîtées respectivement dans les deux glissières selon la direction d'emboîtement, selon une direction d'emboîtement sensiblement perpendiculaire à l'axe principal de vibration, le support étant fixé à la caisse du véhicule.

Le document WO-A-02/095259 divulgue un dispositif antivibratoire de ce type, qui donne entière satisfaction quant à son fonctionnement mais présente l'inconvénient de nécessiter une opération de poinçonnage pour bloquer la première armature dans la glissière, ce qui complique et renchérit le processus de fabrication.

La présente invention a notamment pour but de palier cet inconvénient.

A cet effet, selon l'invention, un **véhicule** du genre en question est caractérisé en ce que la première armature est bloquée dans la glissière par clipsage.

Ainsi, les moyens de blocage de la première armature dans la glissière peuvent être intégrés au support et à la première armature dès leur fabrication, ce qui simplifie le processus de fabrication du dispositif selon l'invention et en diminue le coût.

Dans divers modes de réalisation de l'invention, on peut éventuellement avoir recours en outre à l'une et/ou à l'autre des dispositions suivantes :
- la première armature est en butée contre le support dans un sens d'engagement selon la direction d'emboîtement, et la première armature est bloquée par clipsage sur le support dans un sens de retrait inverse au sens d'engagement ;
- la première armature est bloquée dans la glissière par clipsage d'un organe élastique appartenant à un premier élément choisi parmi la première armature et le support, ledit organe élastique comportant une zone de butée anti-retrait qui est en butée contre une zone d'appui anti-retrait appartenant à un deuxième élément choisi parmi la première armature et le support ;
- l'organe élastique appartient à la première armature et la zone d'appui anti-retrait appartient au support ;
- à l'opposé de la zone de butée anti-retrait, l'organe élastique comporte une face d'attaque inclinée adaptée pour déformer élastiquement l'organe élastique par effet de came pendant que la première armature est emboîtée avec ladite glissière ;
- la patte élastique est une patte flexible s'étendant dans la direction d'emboîtement, vers l'avant dans la direction d'engagement ;
- la première armature est bloquée dans la glissière par clipsage dans une zone arrière de la glissière selon le sens d'engagement ;
- la première armature est bloquée dans la glissière par clipsage d'une pluralité d'organes élastiques ;
- le support comporte deux branches latérales portant respectivement deux glissières, lesdites branches latérales étant reliées par un fond et délimitant une embouchure par laquelle est emboîtée la première armature, la première armature étant bloquée dans la glissière par clipsage au voisinage de l'embouchure ;
- la première armature comporte deux pions s'étendant selon la direction d'emboîtement et adaptés pour s'engager dans des trous complémentaires ménagés dans le support.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue de face d'un dispositif antivibratoire selon un premier mode de réalisation de l'invention,
- la figure 2 est une vue partielle en perspective et en coupe verticale, montrant une partie de la première armature et le support du dispositif de la figure 1,
- la figure 3 est une vue partielle en perspective et en coupe horizontale, montrant la première armature et le support du dispositif antivibratoire des figures 1 et 2,
- la figure 4 est une vue en perspective du support du dispositif antivibratoire des figures 1 à 3,
- la figure 5a est une vue en perspective et de dessous d'une partie de la première armature du dispositif antivibratoire des figures 1 à 3,
- la figure 5b est une vue en perspective, de dessus et en éclaté, de deux pièces constituant la première armature du dispositif antivibratoire des figures 1 à 3,
- la figure 6 est une vue en perspective d'un dispositif antivibratoire selon un deuxième mode de réalisation de l'invention,
- la figure 7 est une vue en coupe longitudinale du dispositif de la figure 6,
- la figure 8 est une vue en perspective du support du dispositif antivibratoire des figures 6 et 7, et
- la figure 9 est une vue en perspective d'une capsule hydraulique appartenant au dispositif antivibratoire des figures 6 et 7, cette capsule hydraulique comprenant la première armature.

Sur les différentes figures, les mêmes références désignent des éléments identiques ou similaires.

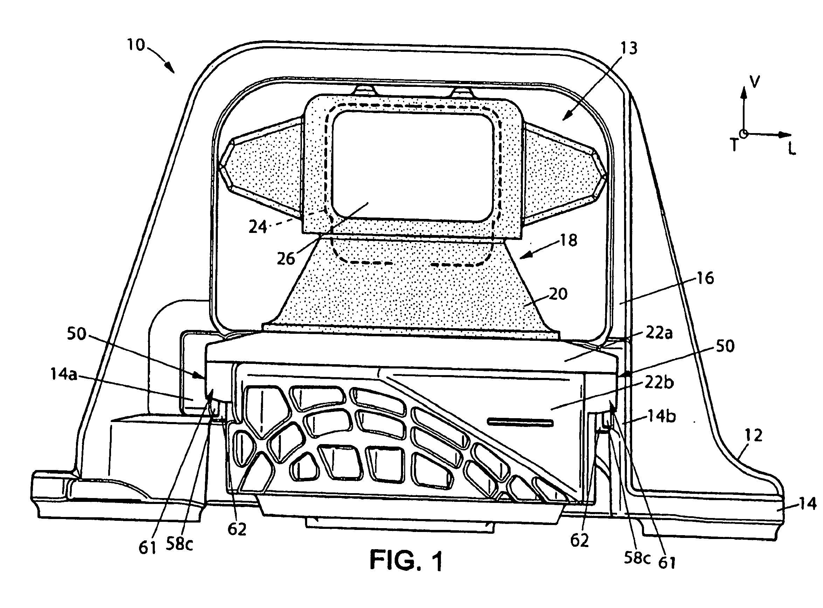

La figure 1 représente un dispositif antivibratoire 10 selon un premier mode de réalisation de l'invention, qui est prévu pour relieur :
- d'une part un premier élément rigide, la caisse d'un véhicule,
- et d'autre part un deuxième élément rigide, le moteur du véhicule.

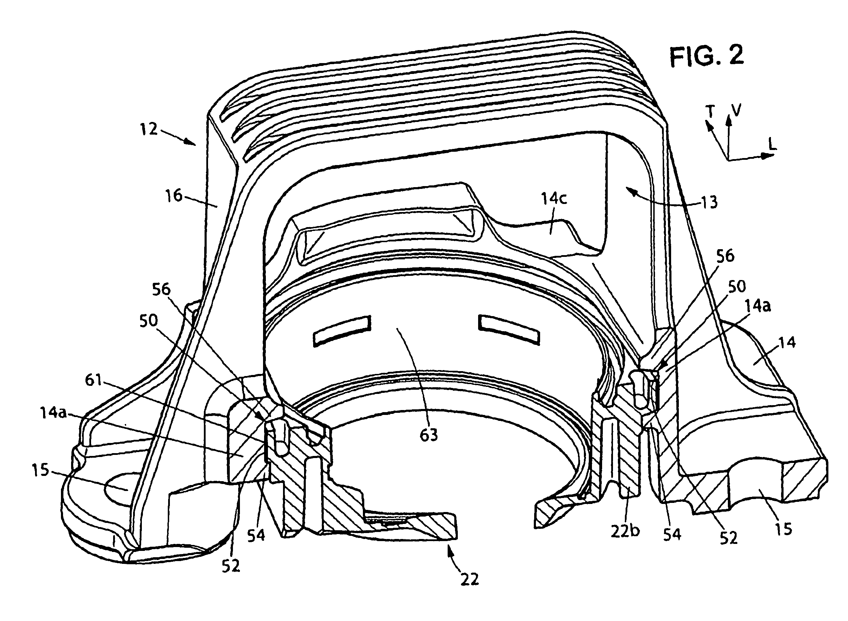

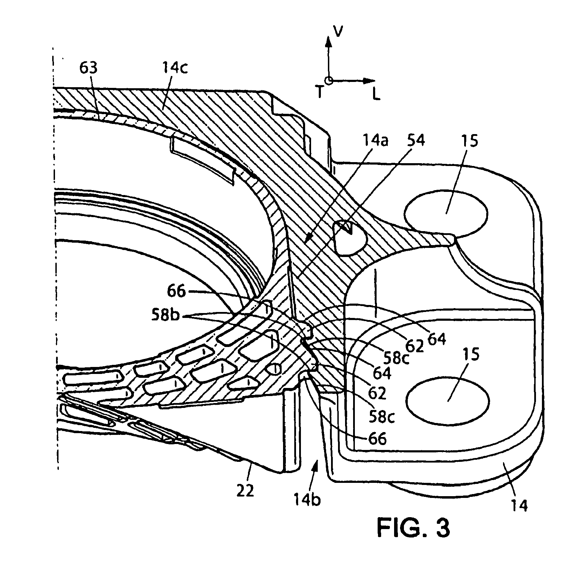

Le dispositif antivibratoire 10 comporte un support 12 qui peut par exemple être moulé d'une seule pièce en matière plastique ou en alliage léger et qui présente :
- une embase horizontale 14 avec des points de fixation 15 (voir figures 2 et 3) permettant de fixer le support 12 à la caisse du véhicule (les points de fixation 15 peuvent par exemple être des trous permettant le passage de vis),
- et un arceau limiteur 16 qui s'étend sensiblement verticalement à partir de l'embase 14 (dans le plan des axes V, L) et délimite avec ladite embase un espace intérieur 13.

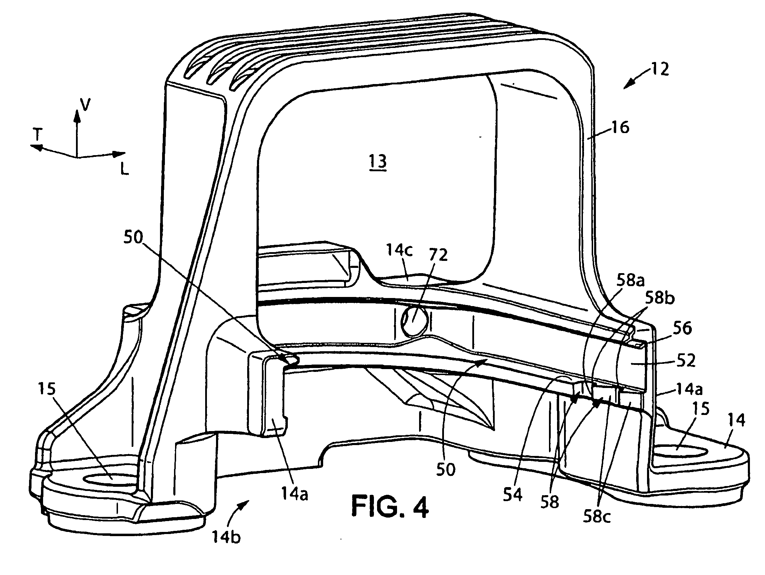

Comme on peut le voir plus en détail sur les figures 3 et 4, l'embase 14 présente une forme générale de U, comprenant :
- deux branches latérales horizontales 14a dont les extrémités libres définissent une embouchure 14b ouverte,
- et un fond courbe 14c joignant lesdites branches latérales à l'opposé de l'embouchure 14b.

Dans l'exemple considéré ici, les points de fixation 15 susmentionnés sont ménagés dans des parois s'étendant horizontalement vers l'extérieur à partir desdites branches latérales 14a.

Le dispositif antivibratoire comporte en outre un élément antivibratoire 18 monté dans l'espace intérieur 13 du support 12, comme représenté sur la figure 1. L'élément antivibratoire 18 comporte un corps en élastomère 20 surmoulé et adhérisé sur des première et deuxième armatures 22, 24, respectivement inférieure et supérieure dans l'exemple représenté. La première armature 22 est solidarisée avec l'embase 14 du support 12, tandis que la deuxième armature 24 est solidarisée avec le moteur du véhicule.

La deuxième armature 24 peut par exemple délimiter un logement 26 prévu pour recevoir un bras solidaire du moteur, ledit bras pouvant par exemple être orienté selon la direction transversale T du véhicule.

L'élément antivibratoire peut notamment être un élément hydraulique comportant une chambre supérieure de travail délimitée intérieurement par le corps en élastomère 20 et reliée par un passage étranglé à une chambre inférieure de compensation, ces deux chambres étant remplies d'un liquide (ces éléments ne sont pas représentés ici mais sont bien connus dans l'état de la technique).

Pour le montage de la première armature 22 dans le support 12, l'embase 14 comporte deux glissières 50 rectilignes parallèles (visibles en particulier sur les figures 2 et 4), qui s'étendent par exemple selon la direction T dans l'exemple représenté. Dans l'exemple considéré, les glissières 50 sont formées par des rainures aménagées intérieurement dans les branches parallèles 14a de l'embase.

Comme représenté sur la figure 4, chaque glissière 50 est délimitée extérieurement par une surface latérale verticale extérieure 52 qui s'étend entre une nervure inférieure 54 et une nervure supérieure 56.

Comme représenté sur les figures 3 et 4, dans l'exemple considéré ici, la nervure inférieure 54 de chaque glissière 50 comporte deux encoches 58 ouvertes horizontalement vers l'intérieur, c'est-à-dire vers la première armature 22.

Chaque encoche est délimitée vers l'embouchure 14b par un cran 58a qui présente :
- d'une part, une face verticale anti-retrait 58b s'étendant sensiblement selon le plan des directions L, V et dont la normale est orientée vers le fond 14c,
- et d'autre part, une face verticale inclinée 58c qui s'étend en biais vers l'intérieur des branches latérales 14a et vers le fond 14c.

Comme représenté sur les figures 2 et 3, la première armature 22 présente une forme globalement annulaire et comporte deux nervures latérales extérieures 61, rectilignes et parallèles à la direction T, qui sont dimensionnées pour s'emboîter sans jeu respectivement dans les glissières 50, en s'engageant dans lesdites glissières depuis l'embouchure 14b vers le fond 14c.

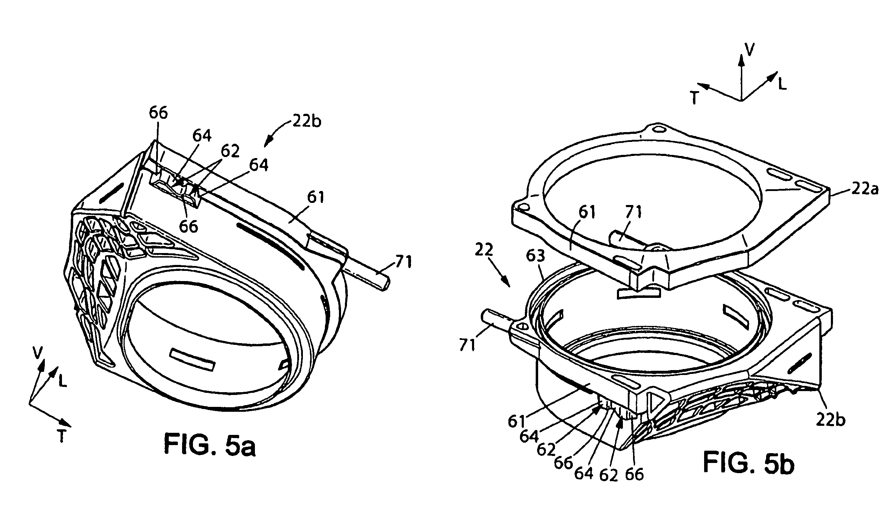

Comme représenté sur la figure 5b, la première armature 22 peut le cas échéant être formée en deux pièces 22a, 22b respectivement supérieure et inférieure, chacune moulée par exemple en matière plastique. Ces deux pièces peuvent être assemblées par exemple par soudure par friction ou par ultrasons. Le corps en élastomère 20 est surmoulé et adhérisé sur la pièce supérieure 22a de la première armature 22. Les nervures 61 susmentionnées peuvent être formées partiellement dans les deux pièces 22a, 22b formant la première armature.

Au-dessous de chaque nervure 61, la première armature 22 comporte deux organes élastiques anti-retrait, par exemple deux pattes de clipsage 62 (voir figures 3, 5a, 5b) adaptées pour s'engager élastiquement chacune dans une encoche 58 du support 12.

Chaque patte de clipsage 62 présente une forme similaire à l'encoche 58 correspondante, avec :
- une face d'attaque verticale inclinée 64 orientée vers le fond 14c, c'est-à-dire vers l'avant dans le sens d'engagement de la première armature dans les glissières 50, ladite face inclinée 64 s'étendant en biais vers le fond 14c et vers l'intérieur des branches latérales 14a,
- et une face de butée anti-retrait 66 qui est parallèle aux axes V, L et est orientée vers l'embouchure 14b susmentionnée.

Les pattes de clipsage 62 se déforment élastiquement lors de l'engagement de la première armature 22 dans les glissières 50, lorsqu'elles passent sur les crans 58a délimitant les encoches 58, puis lesdites pattes de clipsage s'engagent élastiquement dans les encoches 58 lorsqu'une portion avant 63 de la première armature vient en butée contre le fond 14c de l'embase 14. Lors de cet engagement, les branches latérales 14a du support 12 peuvent en outre s'ouvrir légèrement par déformation élastique, en facilitant ainsi le passage des pattes 62 sur les crans 58a.

Une fois les pattes 62 clipsées dans les encoches 58, les faces de butée anti-retrait 66 desdites pattes coopèrent par butée avec les faces anti-retrait 58b des crans 58a, en empêchant ainsi que les nervures 61 de la première armature ne se déboîtent des glissières 50 du support 12.

Par ailleurs, l'armature 22 peut en outre comporter deux pions horizontaux 71 (voir figures 4, 5a, 5b) s'étendant selon la direction T et adaptés pour s'engager dans des trous complémentaires 72 ménagés en correspondance dans le fond 14c de l'embase, ce qui facilite le bon positionnement de la première armature 22 par rapport au support 12.

On notera que les encoches 58 et pattes 62 pourraient être en nombre différent de 4 ou être disposées différemment du mode de réalisation décrit ci-dessus, ou être remplacées par tout autre moyen de clipsage.

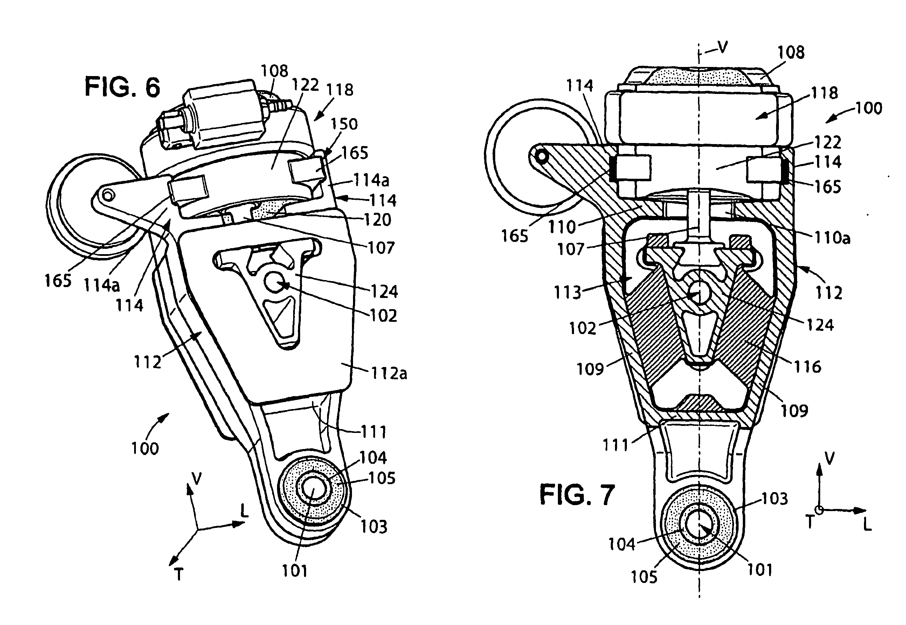

Dans le deuxième mode de réalisation de l'invention représenté aux figures 6 à 9, le dispositif antivibratoire est une bielle de reprise de couple 100 pour véhicule automobile qui comporte un corps rigide de support 112, réalisé par exemple en alliage léger, reliant entre elles des première et deuxième articulations 101, 102 qui sont destinées à être fixées l'une, à la caisse du véhicule et l'autre au moteur du véhicule.

Comme représenté sur la figure 7, la première articulation 101 peut comporter par exemple deux bagues rigides 103, 104 concentriques reliées entre elles par une bague d'élastomère 105, la bague rigide externe 103 étant emboîtée dans un logement cylindrique 106 du corps 112.

La deuxième articulation 102, quant à elle, comporte une armature métallique rigide 124 qui est disposée avec jeu dans un évidement interne 113 du corps 112 et qui est reliée audit corps 112 par un organe souple en élastomère 116. Dans l'exemple représenté, l'organe souple en élastomère 116 présente une forme en V inversé, et est disposé symétriquement par rapport à la direction longitudinale V de la bielle 100, qui est également la direction principale des vibrations que subit ladite bielle (la direction V n'est plus ici une direction verticale comme dans la premier mode de réalisation de l'invention).

Par ailleurs, la bielle 100 comporte une capsule hydraulique 118 comportant une armature annulaire rigide 122 solidaire du corps 112 de la bielle et délimitant intérieurement :
- une chambre de travail délimitée axialement vers l'armature 124 par un corps en élastomère 120 (figure 6) solidaire d'une tige métallique rigide 107 elle-même solidarisée avec l'armature 124 susmentionnée,
- et une chambre de compensation délimitée axialement à l'opposé du corps en élastomère 120 par une paroi souple en élastomère 108 (figures 6 et 7), ladite chambre de compensation étant reliée à la chambre de travail par un passage étranglé. Les chambres de travail et de compensation, ainsi que le passage étranglé, ne sont pas visibles sur les dessins mais sont bien connus dans l'état de la technique.

Comme représenté sur la figure 7, le corps 112 de la biellette peut être ouvert selon une direction transversale T perpendiculaire à la direction V, et ledit corps 112 de la bielle limite les débattements de l'armature 124 selon la direction V susmentionnée et selon une direction L perpendiculaire aux directions V et T. La limitation des débattements de l'armature 124 peut être obtenue par exemple au moyen de :
- deux parois latérales 109 dudit corps 112 qui délimitent l'évidement 113 selon la direction L,
- une paroi d'extrémité 110 du corps 112 qui délimite l'évidement dans la direction V à l'opposé de la première articulation 101, cette paroi d'extrémité présentant une découpe 110a en U ouverte selon la direction T pour permettre le passage de la tige 107,
- et une paroi d'extrémité 111 du corps 112 qui délimite l'évidement dans la direction V vers la première articulation 101.

Les faces ouvertes du corps 112 de la bielle peuvent le cas échéant être protégées par des plaques 112a visibles sur la figure 6.

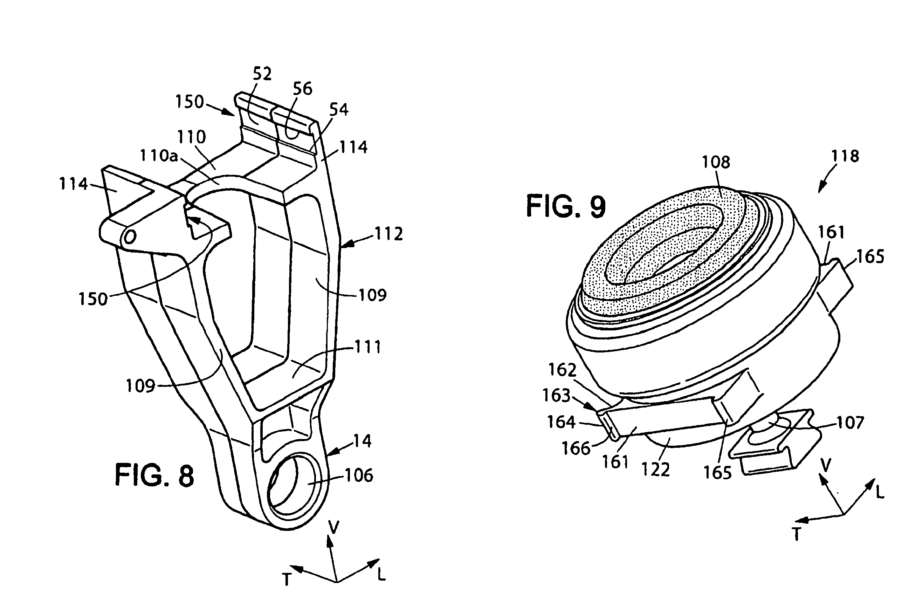

A son extrémité opposée à la première articulation 101, le corps 112 de la bielle comporte deux ailes 114 parallèles, s'étendant selon les directions V, T. Comme représenté sur la figure 8, les ailes 114 comportent respectivement deux glissières 150 parallèles à la direction T, formées par deux rainures ouvertes en regard l'une de l'autre.

L'armature 122 de la capsule hydraulique comporte quant à elle deux nervures 161 (voir figure 9) parallèles à la direction T, qui font saillie à l'opposé l'une de l'autre et qui s'emboîtent sans jeu dans les glissières 150, par coulissement dans la direction T. Chacune de ces nervures 161 comporte :
- à son extrémité avant dans le sens de l'insertion dans les glissières, une patte élastique de clipsage 162 qui fait saillie dans la direction T,
- et à son extrémité arrière dans le sens d'insertion dans les glissières, une butée 165 qui fait saillie latéralement vers l'extérieur et bute contre l'aile correspondante 114 lorsque l'armature 122 est emboîtée à fond dans la glissière.

Chaque patte élastique de clipsage comporte extérieurement un cran 163 orienté vers l'aile correspondante 114. Le cran 163 comporte une face d'attaque inclinée 164 qui s'étend en biais vers l'extérieur et vers l'arrière pour pouvoir faire fléchir élastiquement la patte 162 par effet de came pendant l'emboîtement de l'armature 122 dans les glissières 150, et une face de butée anti-retrait 166. La face de butée anti-retrait 166 de chaque patte élastique 162 s'engage élastiquement contre l'extrémité 114a de l'aile 114 correspondante lorsque l'armature 122 est emboîtée à fond dans les glissières 150 (voir figure 6).

## Revendications

1. **Véhicule** comprenant une **caisse,** un **moteur** et un dispositif antivibratoire pour relier le moteur à la caisse, le **dispositif antivibratoire** comportant :
- des première et deuxième armatures (22, 24 ; 122, 124) reliées entre elles par un corps en élastomère (20, 120) adapté pour se déformer au moins selon un axe principal de vibration (V), la première armature (22 ; 122) étant annulaire, d'axe parallèle à l'axe principal de vibration (V), la deuxième armature (24 ; 124) étant fixée au moteur du véhicule,
- un support (12 ; 112) muni d'au moins une glissière (50 ; 150) formée respectivement par deux rainures parallèles ouvertes l'une vers l'autre et s'étendant selon une direction d'emboîtement (T) sensiblement perpendiculaire à l'axe principal de vibration (V), la première armature (22 ; 122) comportant deux nervures latérales extérieures (61 ; 161) emboîtées respectivement dans les deux rainures selon la direction d'emboîtement (T), le support (12 ; 112) étant fixé à la caisse du véhicule,
**caractérisé en ce que** la première armature (22 ; 122) est bloquée dans la glissière (50 ; 150) par clipsage.

2. Véhicule selon la revendication 1, dans lequel :
- la première armature (22 ; 122) est en butée contre le support (12 ; 112) dans un sens d'engagement selon la direction d'emboîtement (T), et
- la première armature (22 ; 122) est bloquée par clipsage sur le support (12 ; 112) dans un sens de retrait inverse au sens d'engagement.

3. Véhicule selon l'une quelconque des revendications 1 et 2, dans lequel la première armature (22 ; 122) est bloquée dans la glissière (50 ; 150) par clipsage d'un organe élastique (62 ; 162) appartenant à un premier élément choisi parmi la première armature (22 ; 122) et le support (12 ; 112), ledit organe élastique comportant une zone de butée anti-retrait (66 ; 166) qui est en butée contre une zone d'appui anti-retrait (58b ; 114a) appartenant à un deuxième élément choisi parmi la première armature (22 ; 122) et le support (12 ; 112).

4. Véhicule selon la revendication 3, dans lequel l'organe élastique (62 ; 162) appartient à la première armature (22 ; 122) et la zone d'appui anti-retrait appartient au support (12 ; 112).

5. Véhicule selon l'une quelconque des revendications 3 et 4, dans lequel, à l'opposé de la zone de butée anti-retrait (66 ; 166), l'organe élastique (62 ; 162) comporte une face d'attaque (64 ; 164) inclinée adaptée pour déformer élastiquement l'organe élastique par effet de came pendant que la première armature (22 ; 122) est emboîtée avec ladite glissière (50 ; 150).

6. Véhicule selon la revendication 5, dans lequel la patte élastique (162) est une patte flexible s'étendant dans la direction d'emboîtement (T), vers l'avant dans la direction d'engagement.

7. Véhicule selon l'une quelconque des revendications précédentes, dans lequel la première armature (22) est bloquée dans la glissière (50) par clipsage dans une zone arrière de la glissière selon le sens d'engagement.

8. Véhicule selon l'une quelconque des revendications précédentes, dans lequel la première armature (22) est bloquée dans la glissière (50) par clipsage d'une pluralité d'organes élastiques (62).

9. Véhicule selon l'une quelconque des revendications précédentes, dans lequel le support comporte deux branches latérales (14a) portant respectivement les deux glissières (50), lesdites branches latérales (14a) étant reliées par un fond (14c) et délimitant une embouchure (14b) par laquelle est emboîtée la première armature (22), la première armature (22) étant bloquée dans la glissière (50) par clipsage au voisinage de l'embouchure (14b).

10. Véhicule selon l'une quelconque des revendications précédentes, dans lequel la première armature (22) comporte deux pions (71) s'étendant selon la direction d'emboîtement (T) et adaptés pour s'engager dans des trous complémentaires (72) ménagés dans le support (12).

## Patentansprüche

1. Fahrzeug, umfassend eine Karosserie, einen Motor und eine Antivibrationseinrichtung zum Aufhängen des Motors an der Karosserie, die Antivibrationseinrichtung umfassend:
- ein erstes und ein zweites Verstärkungselement (22, 24; 122; 124), die miteinander durch ein Elastomer-Bauteil (20; 120) verbunden sind, das dazu angepasst ist, um sich wenigstens entlang einer Haupt-Vibrationsachse (V) zu verformen, wobei das erste Verstärkungselement (22; 122) ringförmig ist, mit einer Achse parallel zur Haupt-Vibrationsachse (V), wobei das zweite Verstärkungselement (24; 124) an dem Motor des Fahrzeugs befestigt ist,
- ein Gestell (12; 112), das wenigstens mit einer Gleitführung (50; 150) ausgestattet ist, die jeweils aus zwei parallelen Nuten gebildet ist, welche zueinander offen sind und sich längs einer Einsetzrichtung (T) im Wesentlichen senkrecht zur Haupt-Vibrationsachse (V) erstrecken, wobei das erste Verstärkungselement (22; 122) zwei äußere seitliche Rippen (61; 161) umfasst, die jeweils in die zwei Nuten entlang der Einsetzrichtung (T) eingesetzt sind, wobei das Gestell (12; 112) an der Karosserie des Fahrzeugs befestigt ist,
**dadurch gekennzeichnet, dass** das erste Verstärkungselement (22; 122) in der Gleitführung (50; 150) durch Einklipsen blockiert ist.

2. Antivibrationseinrichtung nach Anspruch 1, wobei
- das erste Verstärkungselement (22; 122) an dem Gestell (12; 112) in einer Eingriffsrichtung entlang der Einsetzrichtung (T) anliegt, und
- das erste Verstärkungselement (22; 122) durch Einklipsen in das Gestell (12; 112) in eine Herausnahme-Richtung entgegengesetzt zur Eingriffsrichtung blockiert ist.

3. Antivibrationseinrichtung nach einem der Ansprüche 1 und 2, wobei das erste Verstärkungselement (22; 122) in der Gleitführung (50; 150) durch Einklipsen eines elastischen Elements (62; 162) blockiert ist, das zu einem ersten Element gehört, welches ausgewählt ist aus dem ersten Verstärkungselement (22; 122) und dem Gestell (12; 112), wobei das elastische Element einen Anti-Herausnahme Anlagebereich (66; 166) umfasst, der an einem Anti-Herausnahme Abstützbereich (58b; 114a) anliegt, der zu einem zweiten Element gehört, das ausgewählt ist aus dem ersten Verstärkungselement (22; 122) und dem Gestell (12; 112).

4. Antivibrationseinrichtung nach Anspruch 3, wobei das elastische Element (62; 162) zu dem ersten Verstärkungselement (22; 122) gehört und der Anti-Herausnahme Abstützbereich zu dem Gestell (12; 112) gehört.

5. Antivibrationseinrichtung nach einem der Ansprüche 3 und 4, wobei, dem Anti-Herausnahme Anlagebereich (66; 166) gegenüberliegend, das elastische Element (62; 162) eine geneigte Angriffsfläche (64, 164) umfasst, die angepasst ist, um das elastische Element elastisch zu verformen, durch die Wirkung eines Nocken, während das erste Verstärkungselement (22; 122) mit der Gleitführung (50; 150) eingesetzt wird.

6. Antivibrationseinrichtung nach Anspruch 5, wobei die elastische Lasche (162) eine flexible Lasche ist, die sich in die Einsetzrichtung (T) nach vorne in die Eingriffsrichtung erstreckt.

7. Einrichtung nach einem der vorhergehenden Ansprüche, wobei das erste Verstärkungselement (22) in der Gleitführung (50) durch Einklipsen in einem hinteren Bereich der Gleitführung entlang der Eingriffsrichtung blockiert ist.

8. Antivibrationseinrichtung nach einem der vorhergehenden Ansprüche, wobei das erste Verstärkungselement (22) in der Gleitführung (50) durch Einklipsen einer Mehrzahl von elastischen Elementen (62) blockiert ist.

9. Antivibrationseinrichtung nach einem der vorhergehenden Ansprüche, wobei das Gestell zwei Seitenarme (14a) umfasst, die jeweils die zwei Gleitführungen (50) tragen, wobei die Seitenarme (14a) durch einen Boden (14c) verbunden sind und eine Mündung (14b) begrenzen, durch die das erste Verstärkungselement (22) eingesetzt wird, wobei das erste Verstärkungselement (22) in der Gleitführung (50) durch Einklipsen in der Nähe der Mündung (14b) blockiert ist.

10. Antivibrationseinrichtung nach einem der vorhergehenden Ansprüche, wobei das erste Verstärkungselement (22) zwei Stifte (71) umfasst, die sich in die Einsetzrichtung (T) erstrecken und angepasst sind, um in komplementäre Löcher (72) einzugreifen, die in dem Gestell (12) eingebracht sind.

## Claims

1. Vehicle comprising a body, an engine and an anti-vibration device to connect the engine to the body, the anti-vibration device including:
- first and second strength members (22, 24; 122, 124) interconnected by an elastomer body (20, 120) adapted to be deformed at least relative to a main vibration axis (V), the first strength member (22; 122) being annular with its axis parallel to the main vibration axis (V), the second strength members (24; 124) being fixed to the vehicle engine, and
- a support (12; 112) provided with at least one slider (50; 150) formed respectively by two facing parallel open grooves extending in a fitting direction (T) substantially perpendicular to the main vibration axis (V), the first strength member (22; 122) including two exterior lateral ribs (61; 161) respectively fitting in the two grooves in the fitting direction (T), the support (12; 112) being fixed to the vehicle body,
**characterized in that** the first strength member (22; 122) is blocked in the slider (50; 150) by snap-fitting.

2. Anti-vibration device according to claim 1, wherein:
- the first strength member (22; 122) is abutted against the support (12; 112) in an engagement orientation along the fitting direction (T), and
- the first strength member (22; 122) is blocked by snap-fitting on the support (12; 112) in a withdrawal orientation opposite the engagement orientation.

3. Anti-vibration device according to either of claims 1 and 2, wherein the first strength member (22; 122) is blocked in the slider (50; 150) by snap-fitting an elastic member (62; 162) that is part of a first element chosen from the first strength member (22; 122) and the support (12; 112), said elastic member including an anti-withdrawal abutment area (66; 166) that is abutted against an anti-withdrawal bearing area (58b; 114a) that is part of a second element chosen from the first strength member (22; 122) and the support (12; 112).

4. Anti-vibration device according to claim 3, wherein the elastic member (62; 162) is part of the first strength member (22; 122) and the anti-withdrawal bearing area is part of the support (12; 112).

5. Anti-vibration device according to either of claims 3 and 4, wherein the elastic member (62; 162) includes opposite the anti-withdrawal abutment area (66; 166) an inclined leading face (64; 164) adapted to deform elastically the elastic member by a cam effect when the first strength member (22; 122) is fitted into said slider (50; 150).

6. Anti-vibration device according to claim 5, wherein the elastic member (162) is a flexible lug extending forwardly in the fitting direction (T) in the engagement orientation.

7. Device according to any of the preceding claims, wherein the first strength member (22) is blocked in the slider (50) in the engagement orientation by snap-fitting in a rear area of the slider.

8. Anti-vibration device according to any of the preceding claims, wherein the first strength member (22) is blocked in the slider (50) by snap-fitting a plurality of elastic members (62).

9. Anti-vibration device according to any of the preceding claims, wherein the support includes two lateral branches (14a) carrying respective sliders (50), said lateral branches (14a) being connected by a bottom (14c) and delimiting a mouth (14b) through which the first strength member (22) is fitted, the first strength member (22) being blocked in the slider (50) by snap-fitting in the vicinity of the mouth (14b).

10. Anti-vibration device according to any of the preceding claims, wherein the first strength member (22) includes two pins (71) extending in the fitting direction (T) and adapted to engage in complementary holes (72) formed in the support (12).
